# EUROPÄISCHE PATENTSCHRIFT

(11) **EP 1 202 533 B1**
(45) Veröffentlichungstag und Bekanntmachung des Hinweises auf die Patenterteilung: **10.08.2005**
(21) Anmeldenummer: 01121042.4
(22) Anmeldetag: 01.09.2001
(51) Int. Cl.: H04M 1/03, H04M 1/18, H04M 17/02

(54) **Telefonhörer, insbesondere für Fernsprechapparate an Telefonsäulen**
Handset , particularly for public telephone apparatuses
Combiné téléphonique en particulier pour des appareils téléphoniques publics

(30) Priorität: 27.10.2000 DE 10053281
(43) Veröffentlichungstag der Anmeldung: 02.05.2002
(73) Patentinhaber: FHF Funke + Huster Fernsig GmbH, 45478 Mülheim an der Ruhr (DE)
(72) Erfinder: Krüger, Wilhelm, 46045 Oberhausen (DE); Benisch, Bodo, 45219 Essen (DE)
(74) Vertreter: Honke, Manfred, Dr.-Ing.

(56) Entgegenhaltungen:
- EP-A- 1 005 207
- GB-A- 2 271 038
- US-A- 4 291 202
- PATENT ABSTRACTS OF JAPAN Bd. 0141, Nr. 66 (E-0911), 30. März 1990 (1990-03-30) & JP 2 021760 A (MATSUSHITA ELECTRIC IND CO LTD), 24. Januar 1990 (1990-01-24)

## Beschreibung

Die Erfindung betrifft einen Telefonhörer, insbesondere für Fernsprechapparate an Telefonsäulen, mit einem Hörergehäuse aus einer Oberschale und einer Unterschale mit zwischen Oberschale und Unterschale angeordneter Hörkapsel und Sprechkapsel, wobei die Unterschale im Bereich von Hörkapsel und Sprechkapsel Schalldurchtrittsöffnungen aufweist, und mit einem Kabelanschlussteil.

Derartige Telefonhörer sind in verschiedenen Ausführungsformen bekannt. Das Hörergehäuse aus Oberschale und Unterschale besteht regelmäßig aus Kunststoff. Derartige Telefonhörer genügen hinsichtlich ihrer Stabilität zwar dem Hausgebrauch, sind jedoch dann unbefriedigend, wenn Vandalismus zu befürchten ist. Das gilt nicht nur für den Einsatz von Fernsprechapparaten in Telefonhäuschen, sondern insbesondere auch dann, wenn Fernsprechapparate an lediglich Telefonsäulen installiert werden. - Hier setzt die Erfindung ein.

In der GB 2 271 038 A wird ein Telefonhörer mit einem Hörergehäuse und einer Abdeckplatte beschrieben, wobei innerhalb des Hörergehäuses eine Hörkapsel und ein Mikrophon angeordnet sind.

Der Erfindung liegt das technische Problem zugrunde, einen Telefonhörer zu schaffen, der sich durch erhöhte Stabilität und insbesondere Verwindungssteifigkeit zum Schutz gegen unsachgemäßen Gebrauch auszeichnet.

Diese Aufgabe löst die Erfindung bei einem gattungsgemäßen Telefonhörer dadurch, dass zwischen der Oberschale und der Unterschale eine Mittelschale eingesetzt ist, und dass die Mittelschale endseitig jeweils eine Lagerbuchse mit oberschalenseitiger Montageöffnung für die Hörkapsel und die Sprechkapsel aufweist. Dabei ist das Kabelanschlussteil erfindungsgemäß zwischen der Unterschale und der Mittelschale angeordnet. - Diese Maßnahmen der Erfindung haben zur Folge, dass die Stabilität und insbesondere Verwindungssteifigkeit des erfindungsgemäßen Telefonhörers aufgrund der zwischen Oberschale und Unterschale zwischengeschalteten Mittelschale deutlich erhöht werden. Das gilt insbesondere auch für den Schutz von Hörkapsel und Sprechkapsel, die in der entsprechenden Lagerbuchse der Mittelschale gleichsam zusätzlich zwischen Oberschale und Unterschale eingebettet und folglich geschützt sind. Auch das zwischen Unterschale und Mittelschale eingesetzte Kabelanschlussteil erhöht die Stabilität des erfindungsgemäßen Telefonhörers.

Weitere erfindungswesentliche Merkmale sind im Folgenden aufgeführt. So sieht die Erfindung vor, dass die Mittelschale mit der Lagerbuchse für die Hörkapsel in eine entsprechende Buchsenaufnahme der Unterschale eingreift. Soweit wird gleichsam ein Doppelschutz für die Hörkapsel verwirklicht. Die Unterschale und die Mittelschale sind aneinander befestigt, z. B. miteinander verklebt oder verschweißt, vorzugsweise ultraschallverschweißt. Ferner kann die Oberschale mit der Unterschale und/oder Mittelschale verrastet und/oder verschraubt sein.

Weiter sieht die Erfindung vor, dass die Mittelschale zwischen den Montageöffnungen für die Hörkapsel und die Sprechkapsel einen eingeformten Leitungskanal für die Verdrahtung von Hörkapsel und Sprechkapsel aufweist, so dass deren Verdrahtung gleichsam versenkt in der Mittelschale untergebracht ist. Ferner kann die Mittelschale zwischen den Montageöffnungen für die Hörkapsel und die Sprechkapsel eine Durchtrittsöffnung für eine Schraubverbindung von Unterschale und Oberschale aufweisen. Zweckmäßigerweise ist zwischen der Unterschale und der Mittelschale eine Staukammer für Überlängen der Verdrahtung vorgesehen, wobei die Mittelschale eine zu der Staukammer führende Durchtrittsöffnung für Verdrahtungsüberlängen aufweist.

Das Kabelanschlussteil weist erfindungsgemäß einen endseitig aus Unterschale und Oberschale vorkragenden Kabeleinführungsstutzen mit einer Federaufnahme auf. Diese Federaufnahme ermöglicht den Einsatz einer Schraubenfeder vorgegebener Länge zum Schutz des anzuschließenden Fernsprechkabels. Weiter sieht die Erfindung vor, dass das Kabelanschlussteil im Bereich der Lagerbuchse in der Mittelschale für die Unterbringung der Sprechkapsel eine entsprechende Ausnehmung und im Anschluss an die Ausnehmung einen Distanzsockel für die Unterschale und die Oberschale aufweist. Dabei kann der Distanzsockel eine Durchbrechung zum Hindurchführen einer Verbindungsschraube für die Schraubverbindung von Unterschale und Oberschale besitzen. Aus Stabilitätsgründen ist das Kabelanschlussteil als Druckgussteil ausgebildet.

Im Folgenden wird die Erfindung anhand einer lediglich ein Ausführungsbeispiel darstellenden Zeichnung näher erläutert. Es zeigen:

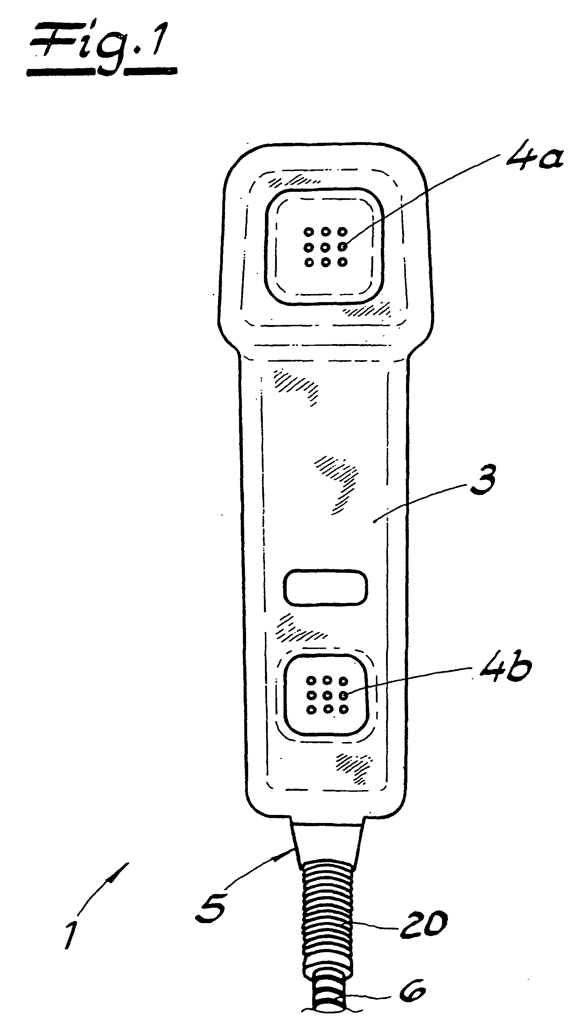

- Fig. 1: einen erfindungsgemäßen Telefonhörer in Ansicht auf die Unterschale,

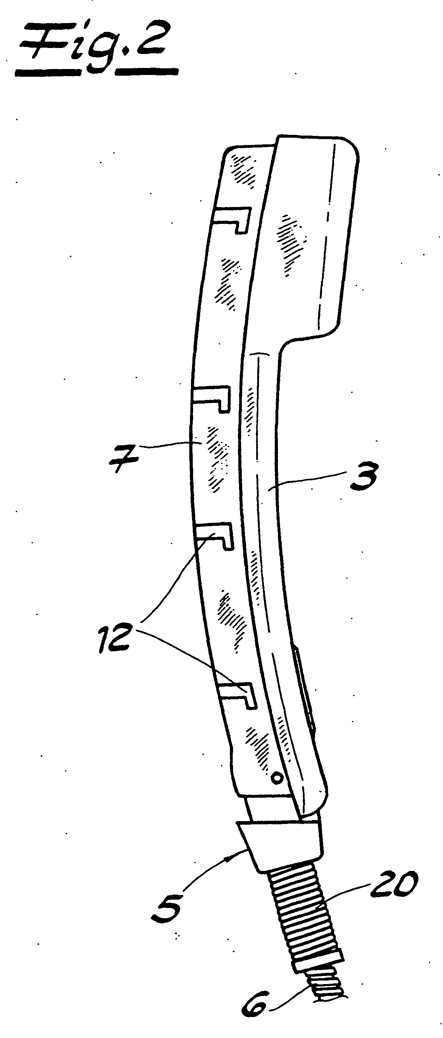

- Fig. 2: eine Seitenansicht des Gegenstandes nach Fig. 1 ohne Oberschale,

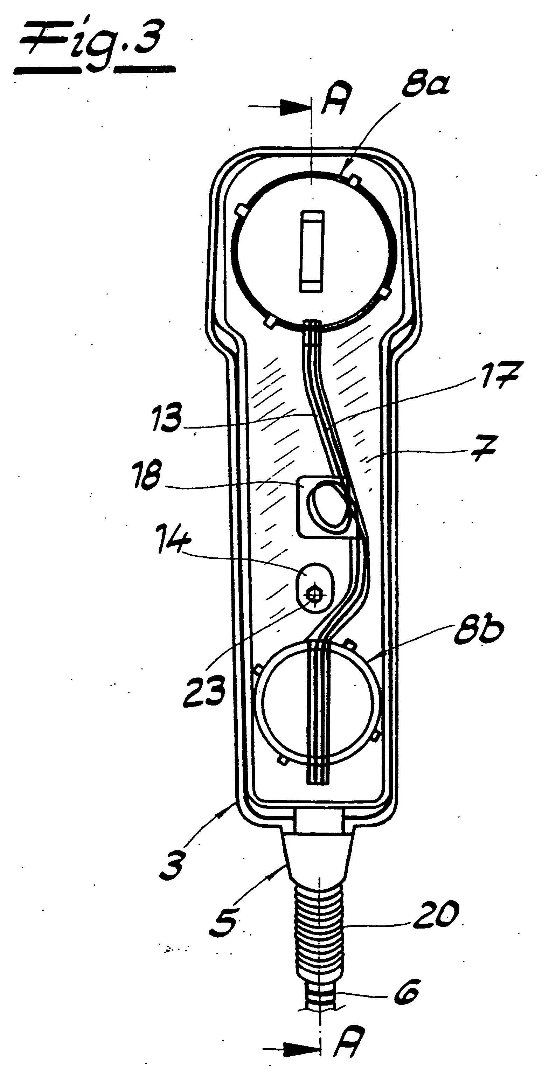

- Fig. 3: eine Draufsicht auf den Gegenstand nach Fig. 1 ohne Oberschale,
- Fig. 4: einen Schnitt AA durch den Gegenstand nach Fig. 3 mit gelöster Oberschale ohne Hörkapsel und Sprechkapsel,
- Fig. 5: eine Draufsicht auf die Mittelschale,

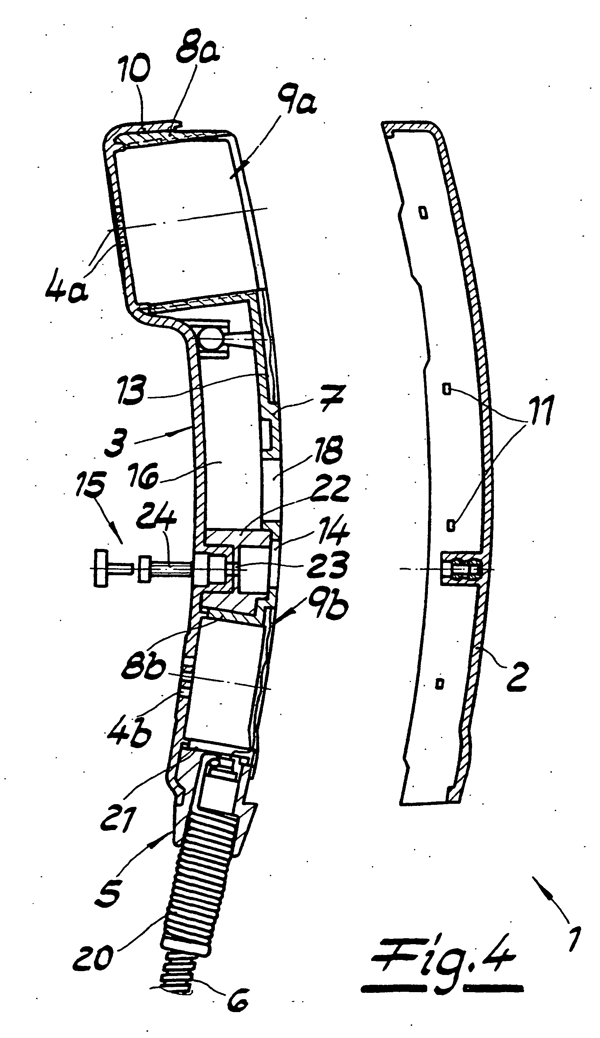

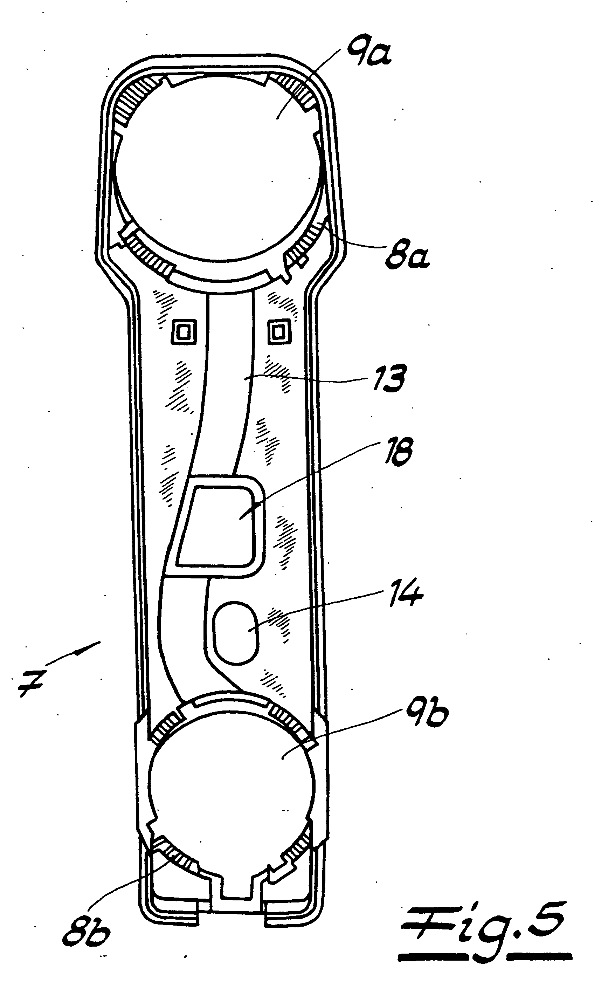

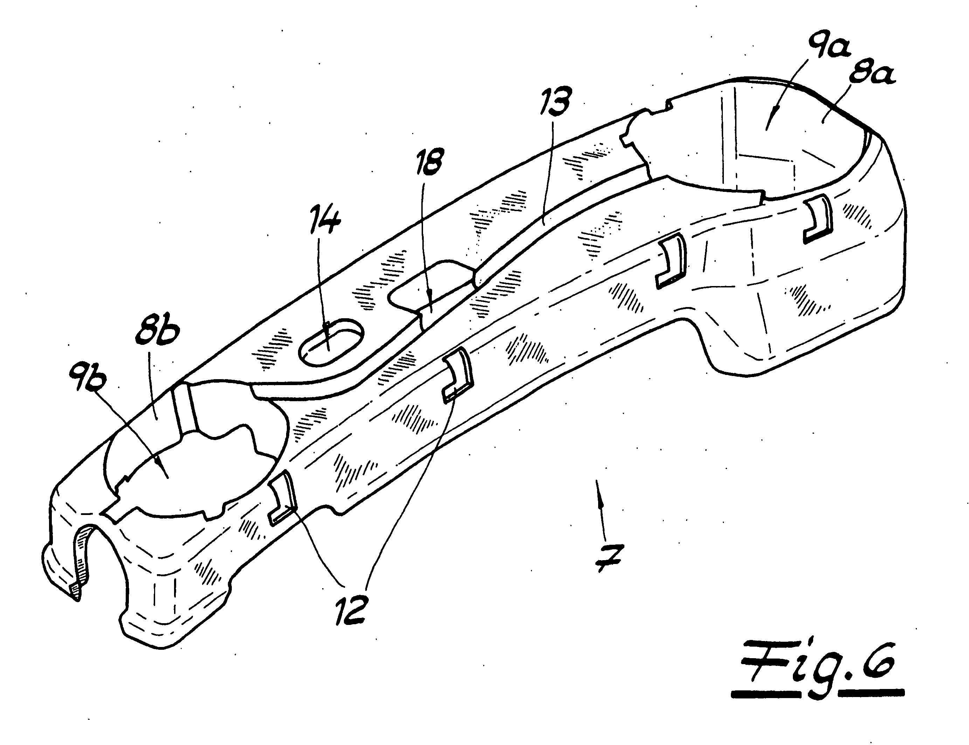

- Fig. 6: den Gegenstand nach Fig. 5 in perspektivischer Darstellung,

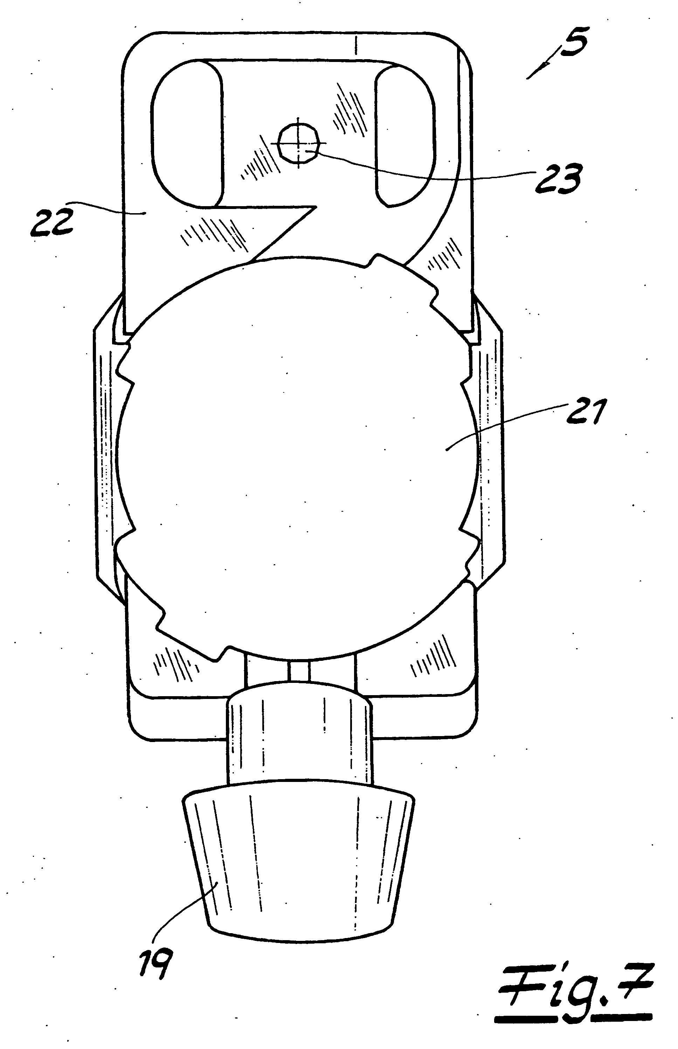

- Fig. 7: eine Draufsicht auf das Kabelanschlussteil und

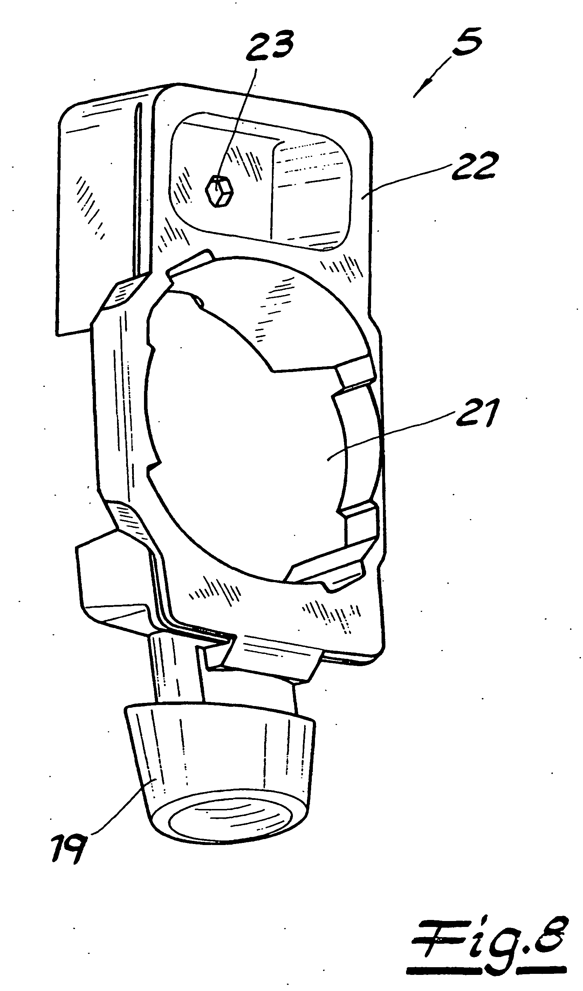

- Fig. 8: den Gegenstand nach Fig. 7 in perspektivischer Darstellung.

In den Figuren ist ein Telefonhörer 1 dargestellt wie er insbesondere bei Fernsprechapparaten an Telefonsäulen eingesetzt wird. Der Telefonhörer 1 weist ein Hörergehäuse aus einer Oberschale 2 und einer Unterschale 3 mit zwischen Oberschale 2 und Unterschale 3 angeordneter Hörkapsel und Sprechkapsel auf, wobei die Unterschale 3 im Bereich von Hörkapsel und Sprechkapsel Schalldurchtrittsöffnungen 4a, 4b aufweist. Hörkapsel und Sprechkapsel sind nicht gezeigt. - Außerdem ist ein Kabelanschlussteil 5 für ein Fernsprechkabel 6 vorgesehen. Zwischen der Oberschale 2 und der Unterschale 3 ist eine Mittelschale 7 eingesetzt. Die Mittelschale 7 weist endseitig jeweils eine Lagerbuchse 8a, 8b mit oberschalenseitiger Montageöffnung 9a, 9b für die Hörkapsel und die Sprechkapsel auf. Das Kabelanschlussteil 5 ist zwischen der Unterschale 3 und der Mittelschale 7 eingesetzt.

Die Mittelschale 7 greift mit der Lagerbuchse 8a für die Hörkapsel in eine entsprechende Buchsenaufnahme 10 der Unterschale 3 ein. Unterschale 3 und Mittelschale 7 können miteinander verklebt oder verschweißt sein. Die Oberschale 2 ist mit der Unterschale 3 und/oder Mittelschale 7 verrastet und nach dem Ausführungsbeispiel verschraubt. Ferner greift die Oberschale 2 mit Rastnasen 11 in entsprechende Rastausnehmungen 12 an der Mittelschale 7 ein.

Die Mittelschale 7 weist zwischen den Montageöffnungen 9a, 9b für die Hörkapsel und die Sprechkapsel einen eingeformten Leitungskanal 13 für die Verdrahtung von Hörkapsel und Sprechkapsel auf. Ferner besitzt die Mittelschale 7 zwischen den Montageöffnungen 9a, 9b für die Hörkapsel und die Sprechkapsel eine Durchtrittsöffnung 14 für eine Schraubverbindung 15 von Unterschale 3 und Oberschale 2. Zwischen der Unterschale 3 und der Mittelschale 7 kann eine Staukammer 16 für Überlängen der Verdrahtung 17 vorgesehen sein. Dazu weist die Mittelschale 7 eine zu der Staukammer 16 führende Durchtrittsöffnung 18 für Verdrahtungsüberlängen auf.

Das Kabelanschlussteil 5 besitzt einen endseitig aus Unterschale 3 und Oberschale 2 vorkragenden Kabeleinführungsstutzen 19 mit einer Federaufnahme für eine schraubenwendelförmige Schutzfeder 20 zum endseitigen Schutz des eintretenden Fernsprechkabels 6. Ferner weist das Kabelanschlussteil 5 im Bereich der Lagerbuchse 8b in der Mittelschale 7 für die Unterbringung der Sprechkapsel eine entsprechende Ausnehmung 21 und im Anschluss an diese Ausnehmung 21 einen Distanzsockel 22 für die Unterschale 3 und die Oberschale 2 auf. Der Distanzsockel 22 besitzt eine Durchbrechung 23 zum Hindurchführen einer Verbindungsschraube 24 für die Schraubverbindung 15 von Unterschale 3 und Oberschale 2. - Das Kabelanschlussteil 5 ist als Druckgussteil ausgebildet, die Mittelschale 7 besteht wie Oberschale 2 und Unterschale 3 aus Kunststoff.

## Patentansprüche

1. Telefonhörer (1), insbesondere für Fernsprechapparate an Telefonsäulen, mit einem Hörergehäuse aus einer Oberschale (2) und einer Unterschale (3) mit zwischen Oberschale und Unterschale angeordneter Hörkapsel und Sprechkapsel, wobei die Unterschale im Bereich von Hörkapsel und Sprechkapsel Schalldurchtrittsöffnungen (4a, 4b) aufweist, und mit einem Kabelanschlussteil (5), **dadurch gekennzeichnet, dass** zwischen der Oberschale (2) und der Unterschale (3) eine Mittelschale (7) eingesetzt ist und dass die Mittelschale (7) endseitig jeweils eine Lagerbuchse (8a, 8b) mit oberschalenseitiger Montageöffnung (9a, 9b) für die Hörkapsel und die Sprechkapsel aufweist.

2. Telefonhörer nach Anspruch 1, **dadurch gekennzeichnet, dass** das Kabelanschlussteil (5) zwischen der Unterschale (3) und der Mittelschale (7) eingesetzt ist.

3. Telefonhörer nach Anspruch 1 oder 2, **dadurch gekennzeichnet, dass** die Mittelschale (7) mit der Lagerbuchse (8a) für die Hörkapsel in eine entsprechende Buchsenaufnahme (10) der Unterschale (3) eingreift.

4. Telefonhörer nach einem der Ansprüche 1 bis 3, **dadurch gekennzeichnet, dass** die Unterschale (3) und die Mittelschale (7) aneinander befestigt, z. B. miteinander verklebt oder verschweißt sind.

5. Telefonhörer nach einem der Ansprüche 1 bis 4, **dadurch gekennzeichnet, dass** die Oberschale (2) mit der Unterschale (3) und/oder Mittelschale (7) verrastet und/oder verschraubt ist.

6. Telefonhörer nach einem der Ansprüche 1 bis 5, **dadurch gekennzeichnet, dass** die Mittelschale (7) zwischen den Montageöffnungen (9a, 9b) für die Hörkapsel und die Sprechkapsel einen eingeformten Leitungskanal (13) für die Verdrahtung (17) von Hörkapsel und Sprechkapsel aufweist.

7. Telefonhörer nach einem der Ansprüche 1 bis 6, **dadurch gekennzeichnet, dass** die Mittelschale (7) zwischen den Montageöffnungen (9a, 9b) für die Hörkapsel und die Sprechkapsel eine Durchtrittsöffnung (14) für eine Schraubverbindung (15) von Unterschale (3) und Oberschale (2) aufweist.

8. Telefonhörer nach einem der Ansprüche 1 bis 7, **dadurch gekennzeichnet, dass** zwischen der Unterschale (3) und der Mittelschale (7) eine Staukammer (16) für Überlängen der Verdrahtung (17) vorgesehen ist, und die Mittelschale (7) eine zu der Staukammer (16) führende Durchtrittsöffnung (18) aufweist.

9. Telefonhörer nach einem der Ansprüche 1 bis 8, **dadurch gekennzeichnet, dass** das Kabelanschlussteil (5) einen endseitig aus Unterschale (3) und Oberschale (2) vorkragenden Kabeleinführungsstutzen (19) mit einer Federaufnahme aufweist.

10. Telefonhörer nach einem der Ansprüche 1 bis 9, **dadurch gekennzeichnet, dass** das Kabelanschlussteil (5) im Bereich der Lagerbuchse (8b) in der Mittelschale (7) für die Unterbringung der Sprechkapsel eine entsprechende Ausnehmung (21) und im Anschluss an diese Ausnehmung (21) einen Distanzsockel (22) für die Unterschale (3) und die Oberschale (2) aufweist.

11. Telefonhörer nach einem der Ansprüche 1 bis 10, **dadurch gekennzeichnet, dass** der Distanzsockel (22) eine Durchbrechung (23) zum Hindurchführen einer Verbindungsschraube (24) für die Schraubverbindung (15) von Unterschale (3) und Oberschale (2) aufweist.

12. Telefonhörer nach einem der Ansprüche 1 bis 11, **dadurch gekennzeichnet, dass** das Kabelanschlussteil (5) als Druckgussteil ausgebildet ist.

## Claims

1. Telephone handset (1), in particular for telephone apparatuses on telephone columns, having a handset housing comprising an upper shell (2) and a lower shell (3) with a receiver capsule and a transmitter capsule arranged between the upper shell and lower shell, wherein the lower shell has sound transmission openings (4a, 4b) in the region of the receiver capsule and transmitter capsule, and having a cable connection part (5), **characterized in that** a middle shell (7) is inserted between the upper shell (2) and the lower shell (3), and **in that** the middle shell (7) has a storage socket (8a, 8b) at each end with an installation opening (9a, 9b) for the receiver capsule and the transmitter capsule on the upper-shell side.

2. Telephone handset according to Claim 1, **characterized in that** the cable connection part (5) is inserted between the lower shell (3) and the middle shell (7).

3. Telephone handset according to Claim 1 or 2, **characterized in that** the storage socket (8a), for the receiver capsule, of the middle shell (7) engages in a corresponding socket retainer (10) on the lower shell (3).

4. Telephone handset according to one of Claims 1 to 3, **characterized in that** the lower shell (3) and the middle shell (7) are fixed to one another, for example adhesively bonded or welded to one another.

5. Telephone handset according to one of Claims 1 to 4, **characterized in that** the upper shell (2) is latched and/or screwed to the lower shell (3) and/or middle shell (7).

6. Telephone handset according to one of Claims 1 to 5, **characterized in that**, between the installation openings (9a, 9b) for the receiver capsule and the transmitter capsule, the middle shell (7) has a channel (13) formed in it for the wiring (17) of the receiver capsule and transmitter capsule.

7. Telephone handset according to one of Claims 1 to 6, **characterized in that**, between the installation openings (9a, 9b) for the receiver capsule and the transmitter capsule, the middle shell (7) has a passage opening (14) for a screw connection (15) of the lower shell (3) and upper shell (2).

8. Telephone handset according to one of Claims 1 to 7, **characterized in that** a storage space (16) for excess lengths of wire (17) is provided between the lower shell (3) and the middle shell (7), and the middle shell (7) has a passage opening (18) which leads to the storage space (16).

9. Telephone handset according to one of Claims 1 to 8, **characterized in that** the cable connection part (5) has a cable insertion connection piece (19) with a spring receptacle which projects out from the ends of the lower shell (3) and upper shell (2).

10. Telephone handset according to one of Claims 1 to 9, **characterized in that** the cable connection part (5) has a corresponding recess (21) in the region of the storage socket (8b) in the middle shell (7) for accommodating the transmitter capsule, and, adjacent to this recess (21), has a spacer cap (22) for the lower shell (3) and the upper shell (2).

11. Telephone handset according to one of Claims 1 to 10, **characterized in that** the spacer cap (22) has an aperture (23) for a connecting screw (24) for the screw connection (15) of the lower shell (3) and upper shell (2) to pass through.

12. Telephone handset according to one of Claims 1 to 11, **characterized in that** the cable connection part (5) is in the form of a die-cast part.

## Revendications

1. Combiné téléphonique (1), en particulier pour appareil téléphonique public, comportant un boîtier de combiné constitué d'une coque supérieure (2) et d'une coque inférieure (3) avec un écouteur et un micro disposés entre la coque supérieure et la coque inférieure, la coque inférieure présentant des orifices de passage du son (4a, 4b) dans la zone de l'écouteur et du micro, et comportant une partie de raccordement de câble (5), **caractérisé en ce qu'**une coque centrale (7) est insérée entre la coque supérieure (2) et la coque inférieure (3) et **en ce que** la coque centrale (7) comporte à chacune de ses extrémités un coussinet (8a, 8b) avec ouverture de montage (9a, 9b) côté coque supérieure pour l'écouteur et le micro.

2. Combiné téléphonique selon la revendication 1, **caractérisé en ce que** la partie de raccordement de câble (5) est insérée entre la coque inférieure (3) et la coque centrale (7).

3. Combiné téléphonique selon la revendication 1 ou 2, **caractérisé en ce que** la coque centrale (7) avec le coussinet (8a) pour l'écouteur s'engage dans un logement de coussinet (10) correspondant de la coque inférieure (3).

4. Combiné téléphonique selon l'une des revendications 1 à 3, **caractérisé en ce que** la coque inférieure (3) et la coque centrale (7) sont fixées l'une à l'autre, par exemple collées ou soudées entre elles.

5. Combiné téléphonique selon l'une des revendications 1 à 4, **caractérisé en ce que** la coque supérieure (2) est encliquetée et/ou est vissée avec la coque inférieure (3) et/ou la coque centrale (7).

6. Combiné téléphonique selon l'une des revendications 1 à 5, **caractérisé en ce que** la coque centrale (7) présente, entre les ouvertures de montage (9a, 9b) pour l'écouteur et le micro, un canal pour lignes (13) formé à l'intérieur pour le câblage (17) de l'écouteur et du micro.

7. Combiné téléphonique selon l'une des revendications 1 à 6, **caractérisé en ce que** la coque centrale (7) présente, entre les ouvertures de montage (9a, 9b) pour l'écouteur et le micro, une ouverture de passage (14) pour une liaison vissée (15) de la coque inférieure (3) et de la coque supérieure (2).

8. Combiné téléphonique selon l'une des revendications 1 à 7, **caractérisé en ce qu'**il est prévu, entre la coque inférieure (3) et la coque centrale (7), une chambre de rangement (7) pour des longueurs excédentaires du câblage (17), et la coque centrale (7) présente une ouverture de passage (18) menant à la chambre de rangement (16).

9. Combiné téléphonique selon l'une des revendications 1 à 8, **caractérisé en ce que** la partie de raccordement de câble (5) comporte, côté extrémité, une tubulure d'introduction de câble (19) faisant saillie de la coque inférieure (3)et de la coque supérieure (2), avec un logement élastique.

10. Combiné téléphonique selon l'une des revendications 1 à 9, **caractérisé en ce que** la partie de raccordement de câble (5) présente, dans la zone du coussinet (8b), dans la coque centrale (7), un évidement (21) approprié pour loger le micro et, à la suite de cet évidement (21), un socle d'écartement (22) pour la coque inférieure (3) et la coque supérieure (2).

11. Combiné téléphonique selon l'une des revendications 1 à 10, **caractérisé en ce que** le socle d'écartement (22) présente un ajour (23) pour le passage d'une vis de liaison (24) pour la liaison vissée (15) de la coque inférieure (3) et de la coque supérieure (2).

12. Combiné téléphonique selon l'une des revendications 1 à 11, **caractérisé en ce que** la partie de raccordement de câble (5) est réalisée sous forme de pièce moulée sous pression.
